# EUROPÄISCHE PATENTSCHRIFT

(11) **EP 1 107 909 B1**
(45) Veröffentlichungstag und Bekanntmachung des Hinweises auf die Patenterteilung: **02.01.2003**
(21) Anmeldenummer: 99946059.5
(22) Anmeldetag: 28.08.1999
(51) Int. Cl.: B63H 23/06, F16H 3/095, F16H 37/04, F16H 57/02

(54) **SCHIFFSGETRIEBE**
BOAT TRANSMISSION
BOITE DE VITESSES DE BATEAU

(30) Priorität: 03.09.1998 DE 19840084
(43) Veröffentlichungstag der Anmeldung: 20.06.2001
(73) Patentinhaber: ZF FRIEDRICHSHAFEN Aktiengesellschaft, 88038 Friedrichshafen (DE)
(72) Erfinder: HUNOLD, Bernard, D-88046 Friedrichshafen (DE)
(86) Internationale Anmeldenummer: EP9906354
(87) Internationale Veröffentlichungsnummer: WO00013970

(56) Entgegenhaltungen:
- EP-A- 0 088 499
- DE-A- 2 544 338
- DE-A- 3 018 610
- DE-A- 3 133 067
- DE-A- 3 144 586
- DE-A- 19 624 913
- US-A- 2 785 582
- US-A- 3 648 546
- US-A- 4 539 856
- US-A- 4 831 894

## Beschreibung

Die Erfindung betrifft ein Mehrgang-Schiffsgetriebe gemäß dem Oberbegriff des Patentanspruchs 1.

Bei konventionellen Schiffsantrieben wird ein Festpropeller über ein Getriebe mit konstanter Übersetzung von einem Motor angetrieben. Diese Konstruktion hat zur Folge, dass die Antriebsanlage lediglich für einen Betriebspunkt optimal abgestimmt ist.

Es gibt jedoch oft Situationen, bei denen sich derartige Konstruktionen ungünstig auswirken: Wenn beispielsweise die Antriebsanlage auf eine möglichst hohe Endgeschwindigkeit ausgelegt ist, wird bei erhöhtem Schiffswiderstand aufgrund von Wetterbedingungen, Fracht etc. der Motor bezüglich der Drehzahl gedrückt, wodurch nur ein Teil der Motorgesamtleistung zur Verfügung steht. Zudem ist das Beschleunigungsverhalten schlecht und die thermische Belastung des Motors hoch. Dies hat auch die Produktion von Ruß zur Folge.

Ist andererseits die Antriebsanlage auf eine möglichst hohe Beschleunigung bzw. auf eine Fahrt bei erhöhtem Widerstand ausgelegt, so wird unter Normalbedingungen die Nenndrehzahl des Motors erreicht, ohne dabei die volle Leistung abzugeben. Dies wirkt sich auf die erreichbare Endgeschwindigkeit negativ aus.

Somit entsteht die Notwendigkeit, die Antriebseinrichtung derart zu optimieren, dass sie an unterschiedliche triebsbedingungen anpaßbar ist, wodurch der Motor stets im optimalen Drehzahlbereich arbeiten kann.

Es ist vorgeschlagen worden, zu diesem Zweck einen Verstellpropeller zu verwenden. Diese Lösung ist jedoch mechanisch sehr aufwendig und folglich teuer und so insbesonders bei Jachten/schnellen Schiffen unüblich. Des weiteren weist ein Verstellpropeller einen schlechten Wirkungsgrad auf.

Die DE 196 24 913 A1 offenbart ein Marineantriebssystem mit einem Motor, einem Schaltmechanismus und einer programmierbaren elektronischen Steuervorrichtung mit einer Schaltparametermatrix. Die elektronische Steuervorrichtung überwacht die Motorbelastung und die Umdrehungsrate und erzeugt ein Steuersignal, welches die Schaltvorgänge steuert. Da dieses System eine Einheit bildet, ist es nicht möglich, bereits bestehende Getriebearten der eingangs genannten konventionellen Art umzurüsten. Vielmehr müssen je nach Anforderungen neue Getriebe entwickelt werden.

Aus der DE 31 02 556 A1 geht ein zweistufiges Getriebe für Schiffsantriebsanlagen hervor, bei dem ein Planetengetriebe verwendet wird. Für die Marschfahrt weist dieses Getriebe einen durch eine Reibkupplung schaltbaren Direktgang mit der Übersetzung 1:1 auf, wohingegen für eine Fahrt mit Höchstgeschwindigkeit ein durch das Planetengetriebe und eine hydraulische Kupplung gebildeter, die Drehzahl ins Schnelle übersetzender schneller Gang vorgesehen ist.

Mit dieser Konstruktion lassen sich keine kleinen Übersetzungssprünge für den Hochgeschwindigkeitsbereich realisieren; eine einfache Änderung der Übersetzung ist ebenfalls nicht möglich. Darüber hinaus treten im Bereich der Höchstgeschwindigkeit Verluste auf.

Schließlich zeigt die DE 31 33 067 A1 ein Mehrgang-Getriebe für Antriebsanlagen mit zwei symmetrisch um eine Hauptwelle herum angeordneten Vorgelegewellen, welche in gewissem Umfang einen Lastausgleich bewirken.

Der vorliegenden Erfindung liegt die Aufgabe zugrunde, ein lastschaltbares Schiffsgetriebe zur Verfügung zu stellen, welches in Kombination mit einem Festpropeller oder Waterjet eine variable Anpassung an unterschiedliche Betriebsbedingungen erlaubt, wobei ein weitergehender Lastausgleich erreicht werden soll.

Diese Aufgaben sind gemäß der Erfindung durch die Merkmale der unabhängigen Patentansprüche gelöst. Weitere Ausgestaltungen der Erfindung gehen aus den Unteransprüchen hervor.

Dementsprechend wird gemäß einer Lösungsform der Erfindung vorgeschlagen, dass die Vorgelegewellen und Übersetzungsteile austauschbar und mit einer entgegengesetzten Orientierung montierbar sind, so dass - mit den selben Bauteilen - eine der ursprünglichen reziproke Übersetzung realisierbar ist.

Das Vorschaltgetriebe ist also modular aufgebaut, da es durch Anpassen einiger weniger Teile auf unterschiedliche Betriebsbedingungen abgestimmt werden kann, ohne die Notwendigkeit neue Getriebe entwickeln zu müssen.

Die Übersetzungsteile sind in einer Ausgestaltung dieser Lösungsform derart gestaltet, dass über ein vorgesehenes Stecksystem mit identischen Teilen aber durch eine andere Montage eine Übersetzung sowohl ins Schnelle als auch ins Langsame darstellbar ist. Außerdem sind durch Variation der Zähnezahlen einzelner Übersetzungsteile unterschiedliche Stufensprünge realisierbar.

All dies erfordert nur einen geringen Montageaufwand, wobei annähernd beliebige Übersetzungen realisierbar und insbesondere auch kleine Übersetzungsänderungen im Gegensatz zu einem Planetengetriebe möglich sind.

Die vorgeschlagene Konstruktion ist kostengünstig, da in den meisten Fällen lediglich eine andere Montage identischer Teile erforderlich ist. Sie bietet außerdem ein hohes Maß an Flexibilität gegenüber verschiedenen Anforderungen.

Weitere Lösungsformen und Ausgestaltungen der Erfindung sind im folgenden anhand der Zeichnung näher erläutert.
In dieser stellen dar:
- Fig. 1a: ein Leistungs-Drehzahl-Diagramm eines auf hohe Endgeschwindigkeit ausgelegten konventionellen Schiffsantriebes;
- Fig. 1b: ein Leistungs-Drehzahl-Diagramm eines auf hohe Beschleunigung ausgelegten konventionellen Schiffsantriebes;
- Fig. 2: eine Querschnittsdarstellung des Vorschaltgetriebes gemäß einer ersten Variante der vorliegenden Erfindung;
- Fig. 3: eine Querschnittsdarstellung des Vorschaltgetriebes gemäß einer zweiten Variante der vorliegenden Erfindung und

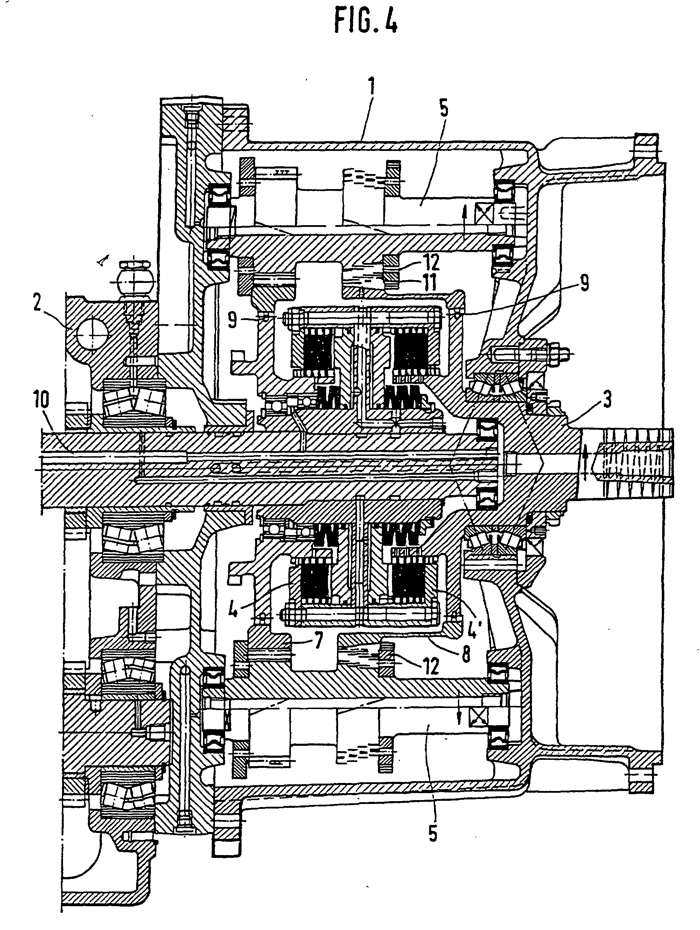

- Fig. 4: eine Querschnittsdarstellung des Vorschaltgetriebes gemäß einer dritten Variante der vorliegenden Erfindung.

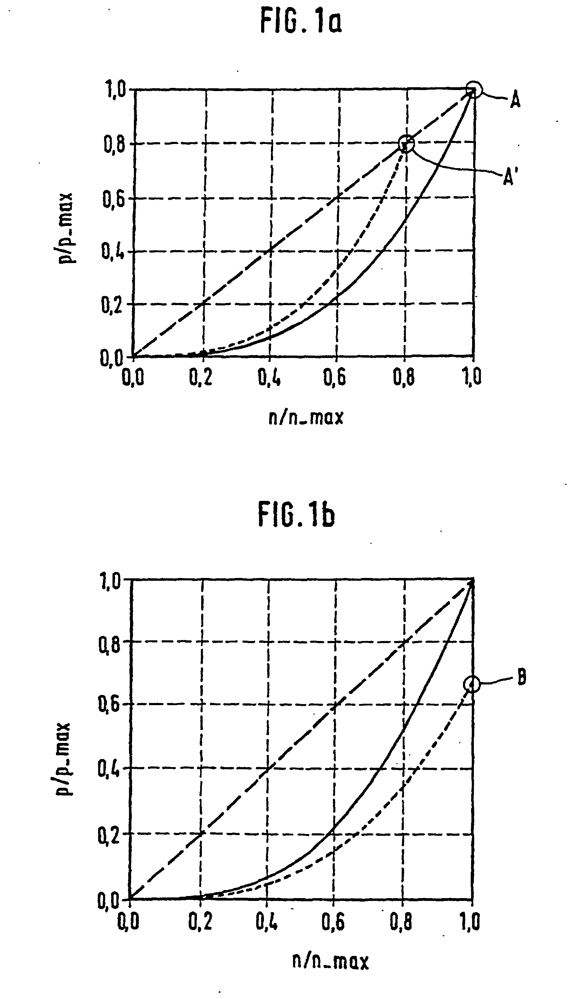

Fig. 1a verdeutlicht die Notwendigkeit einer Anpassung einer Schiffsantriebsanlage an unterschiedliche Betriebsbedingungen:

Wenn die Antriebsanlage auf eine möglichst hohe Endgeschwindigkeit ausgelegt ist, liegt der optimale Betriebspunkt A bei einer entsprechend hohen Motordrehzahl n in der Nähe der Nenndrehzahl n_max, die wiederum in einer hohen abgegebenen Leistung P in der Nähe der maximalen Leistung P_max resultiert. Bei erhöhtem Schiffswiderstand aufgrund von Wetterbedingungen, Fracht etc. wird der Motor bezüglich der Drehzahl gedrückt und der optimale Betriebspunkt kann nicht erreicht werden. Der neue Betriebspunkt A' zeichnet sich dadurch aus, daß lediglich ein Teil der Motorgesamtleistung zur Verfügung steht. Zudem ist das Beschleunigungsverhalten schlecht und die thermische Belastung des Motors hoch. Dies hat auch die Produktion von Ruß zur Folge.

Fig. 1b illustriert eine weitere typische ungünstige Situation: In dem hier gezeigten Fall ist die Antriebsanlage auf hohe Beschleunigung bzw. auf hohen Schiffswiderstand ausgelegt. Dadurch erreicht der Motor unter Normalbedingungen die Nenndrehzahl n_max beim Betriebspunkt B, ohne die volle Leistung P_max abzugeben.

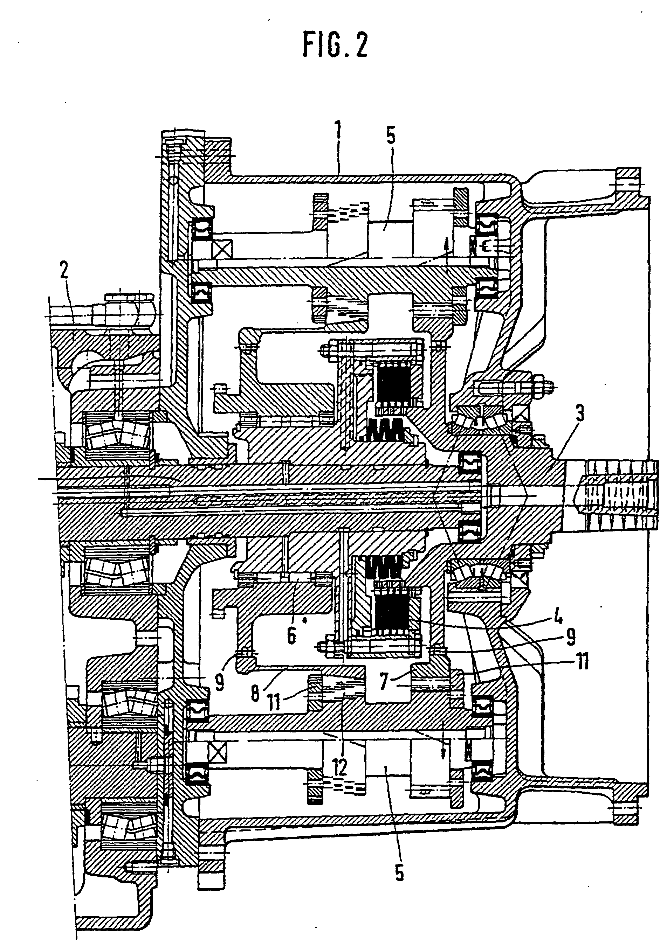

Gemäß Fig. 2 ist ein Vorschaltgetriebe 1 an ein Grundgetriebe 2 angeflanscht. Der Motor treibt eine Welle 3 an. Erfindungsgemäß kann über eine Kupplung 4 direkt zum Grundgetriebe 2 durchgeschaltet werden, wobei die Übersetzung 1:1 beträgt, oder alternativ mittels der beiden Vorgelegewellen 5 eine andere Übersetzung i gewählt werden. Die Übersetzung wird mittels einer weiteren Kupplung oder eines Freilaufs 6 aktiviert. Durch den Freilauf erfolgt die Lastübernahme automatisch mechanisch.

Durch den hier beschriebenen Aufbau als Vorschaltgetriebe mit Leistungsverzweigung auf zwei sich symmetrisch gegenüberliegend angeordnete Vorgelegewellen 5 wirken keine zusätzlichen Kräfte auf das Grundgetriebe 2, da die Lagerkräfte der Hauptwelle 10 aufgehoben werden. Dadurch sind keine Änderungen des Gehäuses oder der Lagerung notwendig.

Im Rahmen dieser besonders vorteilhaften Ausführungsform der vorliegenden Erfindung ist aus Geräuschgründen eine Schrägverzahnung 12 vorgesehen. Um in diesem Fall die Hauptwelle 10 frei von Zusatzkräften zu halten, sind Druckkämme 11 vorgesehen, die die entstehenden Axialkräfte der Hauptwellenräder abstützen.

Zwischen dem Zahnkranz der Schrägverzahnung 12 der Vorgelegewellen 5 und der Hauptwelle 10 ist ein elastisches ringförmiges Verbindungsglied 8 vorgesehen, dessen eines Ende mit dem Zahnkranz kämmt und dessen anderes Ende mit der Hauptwelle 10 verbunden ist, wobei zwischen den beiden Enden ein elastischer Bereich vorgesehen ist. Vorzugsweise weist der elastische Bereich eine reduzierte Wandstärke auf.

Durch entsprechende Wahl der Übersetzungsteile 7 und 8 ist eine beliebige Abstufung der Gänge möglich, so daß stets eine optimale Abstimmung zwischen Motor und Getriebe erreicht werden kann: Um eine andere Übersetzung zu realisieren, müssen lediglich Verzahnungsteile 12 ausgetauscht werden.

Zudem sind die Übersetzungsteile des erfindungsgemäßen Vorschaltgetriebes derart ausgebildet, daß über ein vorgesehenes Stecksystem 9 mit identischen Teilen aber durch eine andere Montage eine der ursprünglichen Übersetzung i reziproke Übersetzung 1/i erreicht werden kann.

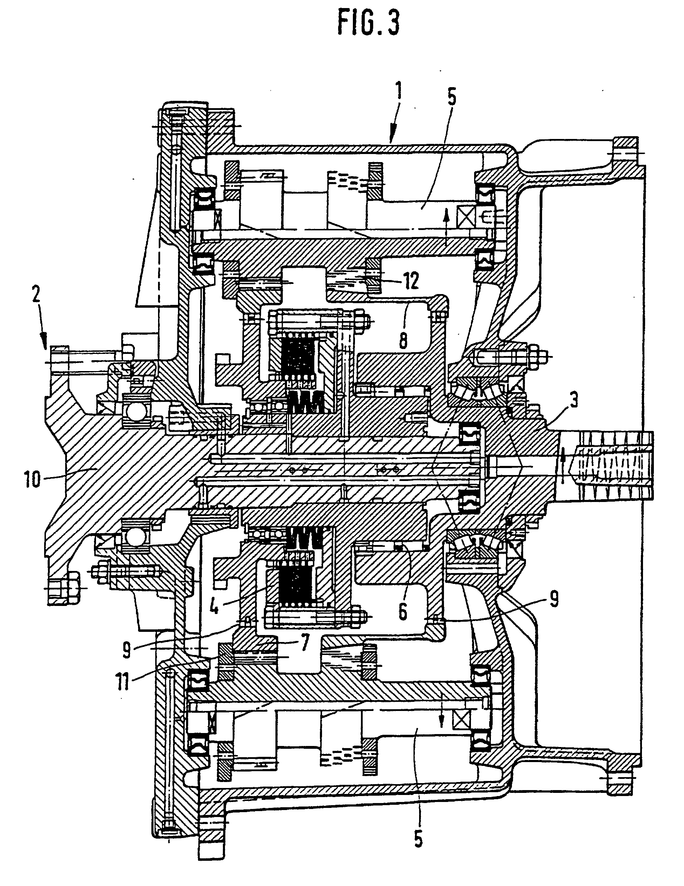

Diese Situation ist in Fig. 3 dargestellt: Durch die entgegengesetzte Orientierung der Vorgelegewellen 5 sowie eine entsprechende Montage der Teile 7 und 8 und der Kupplungs- bzw. Freilaufeinrichtungen 4 und 7 wird eine Übersetzung 1/i erreicht.

Zu diesem Zweck sind die Übersetzungsteile 7, 8 mittels eines Stecksystems 9 jeweils an die vom Motor angetriebene Welle 3 oder an die Hauptwelle 10 des Grundgetriebes 2 aufsteckbar und fixierbar.

Die Lastschaltbarkeit kann ohne Freilauf auch durch die Verwendung von zwei geregelten Lamellenkupplungen 4, 4' realisiert werden. Dies ist in Fig. 5 veranschaulicht: Über die Lamellenkupplung 4' kann direkt zum Grundgetriebe durchgeschaltet werden, während über die Kupplung 4 die Leistung auf die Vorgelegewellen 5 verzweigt wird. Auch die durch die abgebildete Konstruktion erzielte Übersetzung läßt sich ohne viel Aufwand ändern: Zu diesem Zweck werden die Übersetzungsteile, wie bereits erläutert anders montiert, wodurch eine der ursprünglichen reziproke Übersetzung erzielt werden kann.

Obwohl ein Zweigang-Getriebe beschrieben worden ist, sind auch Mehrgang-Getriebe mittels der beschriebenen Vorschaltgetriebe-Konstruktion denkbar. Die Erfindung beschränkt sich nicht auf ein Mehrgang-Schiffsgetriebe, welches ein separates Grundgetriebe aufweist. Es kann ein Gehäuse vorgesehen sein, das alle Übersetzungsstufen, einschließlich die des Grundgetriebes, umfaßt. Je nach Antriebsart bzw. erforderlicher Gesamtübersetzung kann auf ein Grundgetriebe ganz verzichtet werden. Hierzu sind lediglich die Wellenanschlüsse anzupassen. Fig. 3 zeigt ein solches Getriebe.

### Bezugszeichen

- 1: Vorschaltgetriebe
- 2: Grundgetriebe
- 3: vom Motor angetriebene Welle
- 4: Kupplung
- 5: Vorgelegewelle
- 6: Freilauf
- 7: Übersetzungsteil
- 8: Übersetzungsteil, elastisches Verbindungsglied
- 9: Stecksystem
- 10: Hauptwelle
- 11: Druckkamm
- 12: Schrägverzahnung

## Patentansprüche

1. Mehrgang-Schiffsgetriebe für Antriebsanlagen zum Übertragen der Motorleistung auf einen Festpropeller oder Waterjet, welches mindestens zwei um den Umfang einer Hauptwelle (10) verteilte Vorgelegewellen (5) und Übersetzungsteile (7, 8, 12) aufweist, **dadurch gekennzeichnet, dass** die Vorgelegewellen (5) und die Übersetzungsteile (7, 8) austauschbar und mit einer der ursprünglichen entgegengesetzten Orientierung montierbar sind, so dass eine der ursprünglichen reziproke Übersetzung realisierbar ist.

2. Mehrgang-Schiffsgetriebe nach Anspruch 1, **dadurch gekennzeichnet, dass** die Übersetzungsteile (7, 8) mittels eines Stecksystems (9) jeweils an die vom Motor angetriebene Welle (3) oder an die Hauptwelle (10) aufsteckbar und fixierbar sind.

3. Mehrgang-Schiffsgetriebe für Antriebsanlagen zum Übertragen der Motorleistung auf einen Festpropeller oder Waterjet, welches mindestens zwei um den Umfang einer Hauptwelle (10) verteilte Vorgelegewellen (5) und Übersetzungsteile (7, 8, 12) aufweist, wobei für die Vorgelegewellen (5) und die Übersetzungsteile (7, 8) eine Schrägverzahnung (12) vorgesehen ist, **dadurch gekennzeichnet, dass** Druckkämme (11) vorgesehen sind, um die Hauptwelle (10) frei von axialen Zusatzkräften zu halten und dass die Vorgelegewellen (5) derart um den Umfang der Hauptwelle (10) verteilt angeordnet sind, dass keine zusätzlichen Kräfte auf die Hauptwelle (10) wirken.

4. Mehrgang-Schiffsgetriebe für Antriebsanlagen zum Übertragen der Motorleistung auf einen Festpropeller oder Waterjet, welches mindestens zwei um den Umfang einer Hauptwelle (10) verteilte Vorgelegewellen (5) und Übersetzungsteile (7, 8, 12) aufweist, **dadurch gekennzeichnet, dass** zwischen einem Zahnkranz der Vorgelegewellen (5) mit der Verzahnung (12) und der Hauptwelle (10) bzw. der vom Motor angetriebenen Welle (3) ein elastisches ringförmiges Verbindungsglied (8) vorgesehen ist, dessen eines Ende mit dem Zahnkranz kämmt und dessen anderes Ende mit der Hauptwelle (10) bzw. der vom Motor angetriebenen Welle (3) verbunden ist, wobei zwischen den beiden Enden ein elastischer Bereich vorgesehen ist.

5. Mehrgang-Schiffsgetriebe nach Anspruch 4, **dadurch gekennzeichnet, dass** der elastische Bereich durch einen Abschnitt mit reduzierter Wandstärke gebildet ist.

6. Mehrgang-Schiffsgetriebe nach einem der vorangehenden Ansprüche, **dadurch gekennzeichnet, dass** für die Vorgelegewellen (5) und die Übersetzungsteile (7, 8) eine Schrägverzahnung (12) vorgesehen ist, deren Schrägungswinkel derart abgestimmt sind, dass sich die Axialkräfte an den Vorgelegewellen (5) aufheben.

7. Mehrgang-Schiffsgetriebe nach einem der vorangehenden Ansprüche, **dadurch gekennzeichnet, dass** das Getriebe (1) mit zwei Kupplungen (4, 4', 6) versehen ist, so dass über eine erste Kupplung (4') direkt zur Hauptwelle (10) durchgeschaltet wird und durch Betätigung einer zweiten Kupplung (4) die Leistung über die Vorgelegewellen (5) verzweigt wird, um eine andere Übersetzung zu erzielen.

8. Mehrgang-Schiffsgetriebe nach einem der Ansprüche 1 bis 6, **dadurch gekennzeichnet, dass** das Getriebe (1) mit einer Kupplung (4) und einem Freilauf (6) versehen ist, wobei über die Kupplung (4) direkt zur Hauptwelle (10) durchgeschaltet wird und über den Freilauf (6) die Leistung über die Vorgelegewellen (5) abgezweigt wird, so dass die Lastübernahme automatisch mechanisch erfolgt.

9. Mehrgang-Schiffsgetriebe nach einem der vorangehenden Ansprüche, **dadurch gekennzeichnet, dass** es ein Zweiganggetriebe ist.

10. Mehrgang-Schiffsgetriebe nach einem der vorangehenden Ansprüche, **dadurch gekennzeichnet, dass** das Schiffsgetriebe neben einem vorzugsweise eingängigen Grundgetriebe (2) ein separates an das Grundgetriebe (2) anzuflanschendes Vorschaltgetriebe (1) aufweist.

## Claims

1. Multi-speed marine transmission for propulsion systems for transmitting the engine power to a fixed propeller or waterjet, comprising at least two layshafts (5) and speed ratio parts (7, 8, 12) distributed around the periphery of a main shaft (10), **characterized in that** the layshafts (5) and the speed ratio parts (7, 8) are exchangeable and mountable with an opposite orientation to the original orientation so that a speed ratio reciprocal to the original speed ratio is realizable.

2. Multi-speed marine transmission according to claim 1, **characterized in that** the speed ratio parts (7, 8) by means of a plug-in system (9) are mountable and fixable in each case onto the shaft (3) driven by the engine or onto the main shaft (10).

3. Multi-speed marine transmission for propulsion systems for transmitting the engine power to a fixed propeller or waterjet, comprising at least two layshafts (5) and speed ratio parts (7, 8, 12) distributed around the periphery of a main shaft (10), wherein a helical gearing (12) is provided for the layshafts (5) and the speed ratio parts (7, 8), **characterized in that** thrust cones (11) are provided for keeping the main shaft (10) free of axial additional forces and that the layshafts (5) are arranged distributed around the periphery of the main shaft (10) in such a way that no additional forces act upon the main shaft (10).

4. Multi-speed marine transmission for propulsion systems for transmitting the engine power to a fixed propeller or waterjet, comprising at least two layshafts (5) and speed ratio parts (7, 8, 12) distributed around the periphery of a main shaft (10), **characterized in that** provided between a ring gear of the layshafts (5) having the gearing (12) and the main shaft (10) and/or the shaft (3) driven by the engine is a flexible annular connection element (8), of which one end meshes with the ring gear and the other end is connected to the main shaft (10) and/or the shaft (3) driven by the engine, wherein a flexible region is provided between the two ends.

5. Multi-speed marine transmission according to claim 4, **characterized in that** the flexible region is formed by a portion with a reduced wall thickness.

6. Multi-speed marine transmission according to one of the preceding claims, **characterized in that** for the layshafts (5) and the speed ratio parts (7, 8) a helical gearing (12) is provided, the helix angle of which is tuned in such a way as to neutralize the axial forces at the layshafts (5).

7. Multi-speed marine transmission according to one of the preceding claims, **characterized in that** the transmission (1) is provided with two clutches (4, 4', 6) so that by means of a first clutch (4') a direct shift through to the main shaft (10) is effected and by actuating a second clutch (4) the power is distributed via the layshafts (5) in order to achieve a different speed ratio.

8. Multi-speed marine transmission according to one of claims 1 to 6, **characterized in that** the transmission (1) is provided with a clutch (4) and a free-wheel (6), wherein by means of the clutch (4) a direct shift through to the main shaft (10) is effected and by means of the free-wheel (6) the power is distributed via the layshafts (5) so that the power take-over is automatically effected mechanically.

9. Multi-speed marine transmission according to one of the preceding claims, **characterized in that** it is a two-speed transmission.

10. Multi-speed marine transmission according to one of the preceding claims, **characterized in that** the marine transmission in addition to a preferably single-speed basic transmission (2) comprises a separate front-mounted transmission (1), which is to be flange-mounted onto the basic transmission (2).

## Revendications

1. Transmission de bateau à plusieurs vitesses pour installations de propulsion, destinée à transmettre la puissance du moteur à une hélice à pas fixe ou à un propulseur à jet, qui comporte au moins deux arbres intermédiaires (5) répartis autour de la périphérie d'un arbre principal (10) et des éléments de rapport (7, 8, 12), **caractérisée en ce que** les arbres intermédiaires (5) et les éléments de rapport (7, 8) sont interchangeables et peuvent être montés avec une orientation inverse de l'orientation d'origine, de sorte qu'il est possible de réaliser un rapport de transmission inverse du rapport d'origine.

2. Transmission de bateau à plusieurs vitesses selon la revendication 1, **caractérisée en ce que** les éléments de rapport (7, 8) peuvent être emmanchés et immobilisés sur l'arbre (3) entraîné par le moteur ou sur l'arbre principal (10) au moyen d'un système d'emmanchement (9).

3. Transmission de bateau à plusieurs vitesses pour installations de propulsion, destinée à transmettre la puissance du moteur à une hélice ou à un propulseur à jet, qui comporte au moins deux arbres intermédiaires (5) répartis autour de la périphérie d'un arbre principal (10) et des éléments de rapport (7, 8, 12), une denture oblique (12) étant prévue pour les arbres intermédiaires (5) et pour les éléments de rapport (7, 8) **caractérisée en ce qu'**il est prévu des peignes de pression (11) pour maintenir l'arbre principal (10) exempt d'efforts axiaux supplémentaires, et **en ce que** les arbres intermédiaires (5) sont répartis autour de la périphérie de l'arbre principal (10) de telle manière qu'il ne s'exerce pas d'efforts supplémentaires sur l'arbre principal (10).

4. Transmission de bateau à plusieurs vitesses pour installations de propulsion, destinée à transmettre la puissance du moteur à une hélice à pas fixe ou à un propulseur à jet, qui comporte au moins deux arbres intermédiaires (5) répartis autour de la périphérie d'un arbre principal (10) et des éléments de rapport (7, 8, 12), **caractérisée en ce qu'**il est prévu, entre une couronne dentée des arbres intermédiaires (5) pourvue de la denture (12) et l'arbre principal (10) ou l'arbre (3) entraîné par le moteur, selon le cas, un élément de liaison élastique annulaire (8) dont une extrémité engrène avec la couronne dentée et dont l'autre extrémité est reliée à l'arbre principal (10) ou à l'arbre (3) entraîné par le moteur selon le cas, une région élastique étant prévue entre les deux extrémités.

5. Transmission de bateau à plusieurs vitesses selon la revendication 4, **caractérisée en ce que** la région élastique est formée par un segment présentant une épaisseur de paroi réduite.

6. Transmission de bateau à plusieurs vitesses selon l'une des revendications précédentes, **caractérisée en ce qu'**il est prévu, pour les arbres intermédiaires (5) et les éléments de rapport (7, 8), une denture oblique (12) dont les angles d'inclinaison sont accordés de manière que les efforts axiaux sur les arbres intermédiaires (5) s'annulent.

7. Transmission de bateau à plusieurs vitesses selon l'une des revendications précédentes, **caractérisée en ce que** la transmission (1) est pourvue de deux embrayages (4, 4', 6), de sorte qu'au moyen d'un premier embrayage (4'), on s'accouple directement à l'arbre principal (10) et que, par actionnement d'un deuxième embrayage (4), la puissance est ramifiée par l'intermédiaire des deux arbres intermédiaires (5) pour obtenir un autre rapport de transmission.

8. Transmission de bateau à plusieurs vitesses selon l'une des revendications 1 à 6, **caractérisée en ce que** la transmission (1) est pourvue d'un embrayage (4) et d'une roue libre (6), l'embrayage (4) s'accouplant directement à l'arbre principal (10) et la puissance étant ramifiée par les deux arbres intermédiaires (5) au moyen de la roue libre (6), de sorte que le transfert de charge s'effectue automatiquement par voie mécanique.

9. Transmission de bateau à plusieurs vitesses selon l'une des revendications précédentes, **caractérisée en ce qu'**elle est une transmission à deux vitesses.

10. Transmission de bateau à plusieurs vitesses selon l'une des revendications précédentes, **caractérisée en ce que** la transmission de bateau comprend, en plus d'une transmission de base (2) qui est de préférence à une vitesse, une transmission série séparée (1) qui se monte sur la transmission de base (2) par des flasques à brides.
